Europäisches Patentamt

European Patent Office

Office européen des brevets

(19)

(11) Publication number: **0 006 332**
**B2**

# NEW EUROPEAN PATENT SPECIFICATION

(45) Date of publication of the new patent
specification: **12.12.84**

(51) Int. Cl.³: **F 16 B 5/00,** B 60 J 3/00

(21) Application number: **79301088.5**

(22) Date of filing: **08.06.79**

(54) **Mounting extended area articles by attachment system co-operating with edge regions of the articles.**

(30) Priority: **10.06.78 GB 2666178**

(43) Date of publication of application:
**09.01.80 Bulletin 80/01**

(45) Publication of the grant of the patent:
**12.12.84 Bulletin 84/50**

(45) Mention of the opposition decision:
**20.01.82 Bulletin 82/03**

(84) Designated Contracting States:
**AT BE CH FR GB IT LU NL SE**

(56) References cited:
**DE-B-1 119 058**
**DE-U-7 535 625**
**DE-U-7 717 965**
**US-A-1 785 709**

(73) Proprietor: **Harris, Kenneth Albert**
**'Tyehoppet' Lark Hill Road**
**Canewdon Essex (GB)**

(72) Inventor: **Harris, Kenneth Albert**
**'Tyehoppet' Lark Hill Road**
**Canewdon Essex (GB)**

(74) Representative: **Russell-Rayner, Albert Patrick**
**61 Pasture Road**
**Letchworth Hertfordshire, SG6 3LS (GB)**

Courier Press, Leamington Spa, England.

## Description

This invention relates to the mounting of articles having an extended area such that the articles can effectively cover extended area surfaces by an attachment system which co-operates with the edge regions only of the articles and also the surfaces.

In particular the invention is concerned with the mounting of such articles so as to cover sheets of glass under conditions in which it is not possible to make use of screws, pins or the like or the use of adhesives.

A particular application of the system of the invention is to the mounting of a visor to cover the rear screen of a motor vehicle. As is well known the screens of motor vehicles are usually retained in place solely by an endless elastomeric moulding which provides not only a seating for the screen but also a weather proof joint with the bodywork of the vehicle.

In view of the above it will be clear that any arrangement for mounting a visor must be such that it does not damage or blemish the bodywork of the vehicle surrounding the screen, does not interfere with the weather sealing of the screen, is able to withstand the stresses and strains introduced by the movements of the vehicle and the effects of the various weather conditions encountered by the vehicle. Also the mounting must be such as to enable the visor to be readily fitted and removed without the need for complicated tools and location arrangements.

A further difficulty inherent in the provision of attachment arrangements arises from the point that the rear screens of vehicles occur in a wide variety of shapes i.e., rectangular, trapezoidal and in a variety of profiles i.e., flat or curved in one or more planes.

It is an object of the present invention to provide an improved mounting arrangement for extended area articles such as visors which overcomes or at least reduces the effects of the above mentioned difficulties.

Attachment arrangements are already known, for example, from DE—U—7717965 and DE—U—7535625 but such arrangements are not considered to be entirely satisfactory.

According to the invention there is provided a system for mounting an extended area article such as a louvred visor (1) in face-to-face relationship with a surface such as the rear screen (2) of a motor vehicle, which surface is connected to a support by means of an elastomeric retaining element (2A) which defines the border of the surface and which co-operates solely with the marginal regions of the surface, the system comprising at least one first type article mounting means (39) and at least one second type article mounting means (35) each including a first part (40, 36) shaped for insertion between the retaining element (2A) and the surface (2) so as to be gripped therebetween and said at least one first type article mounting means (39) includes a second part (43) for receiving and locating edge regions (6, 7) of the article (1) to be mounted; and said at least one second type article mounting means (35) is provided with a second part (34) including a locking assembly (25) adapted for locking edge regions (21) of the article to the second type article mounting means (35); the system being characterised in that said second part (43) of said at least one first type article mounting means (39) defines with the surface (2) a slot (45) for receiving and locating edge regions (6, 7) of the article to be mounted and at least one pair of third type mounting means (46) is provided each thereof including a base (47) from which extends a part (48) shaped for insertion between the element (2A) and the surface (2) so as to be gripped therebetween, and a pillar (49) upstanding from the base (47) carrying a peg or the like member (52) intended for engagement with the article at a location (16, 20) adjacent one edge thereof, there also being a bore or recess (50) in the pillar (49) for receiving a rod (51) such that the latter projects away from the insertable part (48), the arrangement of the first and second type mounting means (39, 35) being such that on fitting at least one first type mounting means (39) along a first edge of the surface by inserting the first part (40) between the element (2A) and the surface (2) and fitting at least one second type mounting means (35) along a second edge of the surface, opposite to the first edge by inserting the first part (36) between the element (2A) and the surface (2), the article (1) is mountable by inserting one of the relevant article edges (6, 7) into the slot (45) defined by the first type mounting means (39) and operating the locking assembly (25) of the associated second type mounting means (35) to secure the adjacent region (21) of the article to the second type mounting means, and the arrangement of said at least one pair of third type mounting means (46) being such that on fitting the two third type mounting means opposite one another at convenient positions along said first and second edges of the surface (2) by insertion of their insertable parts (48) between the element (2A) and the surface, the pegs or the like members (52) are positioned for engagement with the article (1) thereby to provide additional anchorings for the article (1), and the rod (51) is engaged with the bores (50), the rod bridges the surface (2) and provides for still further support of the article.

Reference will now be made to the accompanying drawings in which:

Figure 1 is an oblique view of a visor illustrating parts of the system of the invention,

Figure 2 is a part sectional view of a retaining means of the invention,

Figure 3 is an exploded view of a detail of Figure 2.

Figure 4 is an oblique view of a further retaining means of the invention,

Figure 5 is a view of a further retaining means,

Figure 6 is an oblique view of a modified detail of the invention.

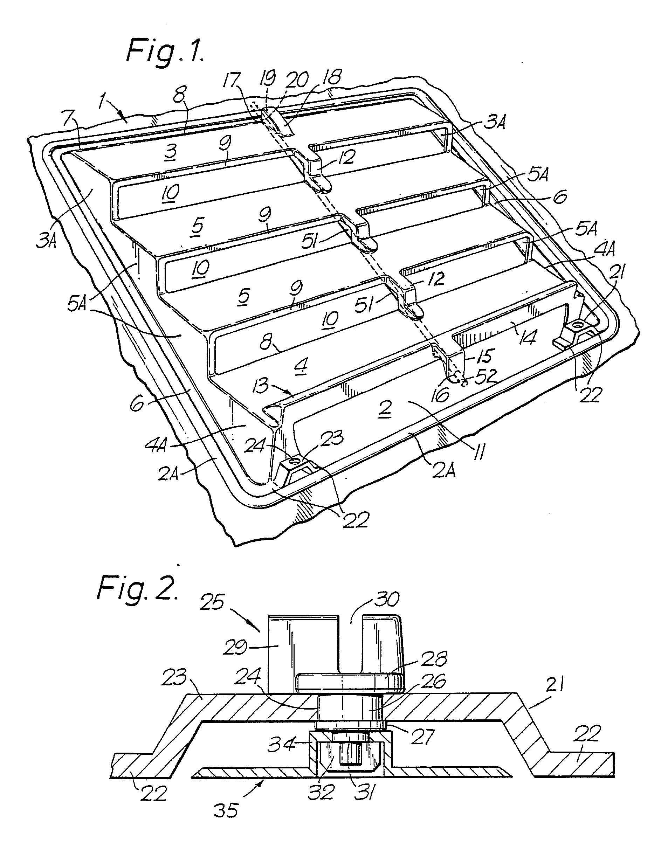

Referring now to Figure 1 this schematically shows an attachment in the form of a visor 1 mounted on the rear screen 2 of a vehicle (not shown). The visor includes a single piece moulded structure formed conveniently from a plastics material and including an upper louvre 3, a bottom louvre 4 and intermediate louvres 5. In practice, the number of intermediate louvres can differ from the number shown in Figure 1.

The end region of the louvres 3, 4 and 5 comprise transverse end walls 3A, 4A, and 5A which connect with a side edge strip 6. The top edge of the louvre 3 terminates as an upper edge strip 7 which lies in the same plane as the edge strips 6. With the construction shown the louvres are profiled for both structural strength and visual appearance. For convenience of description herein they can be regarded as forming a series of spaced parallel strips which do not overlap. The relationship of the upper edge 8 of any louvre with the rear edge 9 of the next adjacent louvre is to produce a narrow slot 10 which extends for substantially the full width of the panel or visor. In the Figure there are three such slots respectively provided between the louvre pairs 3—5, 5—5, 5—4. A fourth slot 11 is effectively produced between the rear part of the bottom louvre 4 and the adjacent surface of the screen 2.

The adjacent louvre pairs are structurally reinforced at their mid points by interconnecting profiled ribs 12 which essentially provide risers between adjacent louvres.

The bottom louvre 4 is provided with a profiled strengthening and air flow deflector or spoiler section 13 including a wall forming piece 14 lying generally transverse to the plane of the main body of the louvre 4. An attachment lug 15 shaped to provide a substantially rigid structure is provided at the midpoint of the wall piece 14. An aperture 16 is provided in the lug.

The centre of top edge 7 is stopped as at 17, whilst the body of the louvre 3 is provided with an integral raised portion 18 having a wall 19 running transverse to the surface of the louvre. This wall is apertured as at 20.

Each end region of the bottom louvre is shaped to provide a mounting lug 21 for a part of the attachment system of the invention. The lug is shaped so as to provide two support pads 22 which lie in the general plane of the two side edge strips 6 and intended to bear against the screen when the visor is fitted.

The portion of the lug 21 lying between the pads 22 is stepped or otherwise raised above the plane of the pads 22. This lug formation is shown in greater detail in Figure 2. The central portion 23 of the lug 21 is apertured as at 24 to receive a locking element 25 having a cylindrical section 26 which is freely rotatable in the aperture 24. The element 25 is held in place by annular flanges 27 and 28 integral with the section 26, the flange 27 being dimensioned and shaped as to be able to enter the aperture 24 and to be pushed therethrough to the position shown but cannot subsequently be removed.

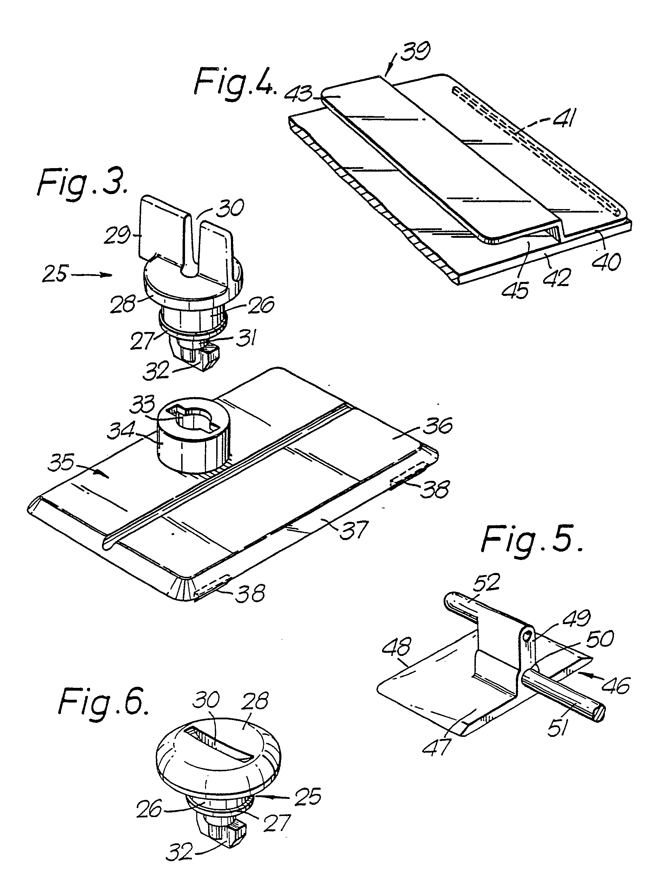

The element 25 is provided with a finger grip 29 with a slot 30 for receiving a coin, screwdriver or the like aid to rotation. A short cylindrical neck 31 extends in prolongation of the section 26. A cross piece 32 is provided at the end of the neck 31. The neck and cross piece combine to provide a locking element with respect to a suitably shaped 'keyhole' 33 provided in a boss 34 upstanding from a generally rectangular element 35. As can be more readily seen from Figure 3 the cross piece 32 will enter the 'keyhole' when aligned as indicated in Figure 3 but is not able to engage or dis-engage from the 'keyhole' when in other positions.

The rectangular element 35 is formed from a plastics material and is of such thickness that the part 36 can be inserted between the moulding 2A holding the screen in place and the surface of the screen. The edge 37 of the part 36 is provided with short lugs 38 which are intended to hook over the edge of the screen when the part 36 is inserted as described.

The top edge 7 and the side edges 6 of the visor 1 are retained in place by retaining elements 39 such as is illustrated in Figure 4. The element 39 includes a first flat elongate part 40 which is intended to be inserted between the screen and the rubber moulding 2A which is for this reason provided with short lugs 41 which are able to hook over the edge of the screen, a small part of which is shown at 42 in Figure 4.

The element 39 includes a second flat elongate part 43 which is spaced from the surface of the screen by means of a step so that when the part 40 is inserted between the screen 42 and the moulding 2A a slot 45 is produced into which the relevant edge 6, 7 of the visor can be inserted. It will be understood that the resiliency of the moulding in conjunction with the relative dimensions of the element 39 ensures a firm grip.

The element of Figure 4 can be of rectangular shape or curved according to whether or not the element is required to co-operate with a corner area or a straight section of the edge of the panel.

In addition to the above, additional retaining elements are provided for positionally locating a bar or rod 51 which is attachable to the visor.

This rod or bar is held in place by two similarly constructed retaining supports 46 of which one is illustrated in Figure 5. Each support 46 includes a rectangular base 47 of which a part 48 is intended to be inserted between the screen 2 and the rubber surround 2A. This part of the base 47 is provided with the shallow lugs (not shown) for hooking over the edge of the screen. An upstanding block or pillar 49 is provided on the base 47. The pillar has a bore 50 into which the end of the rod 51 is to be inserted as a firm push fit. An outwardly directed spigot 52 extends from the pillar.

Two of the supports 46 are provided in such positions that the spigots 52 can engage in the apertures 16 and 20. It will be understood that the rod 51 in extending along the central region of the louvres 3, 4, 5 and thus the visor provides a stiffening and support for the central part of the visor. For this reason the profiling and shaping of the risers or ribs 12, and if necessary the louvres are grooved or otherwise channelled to accommodate the bar 51.

The above described attachment elements are used to secure the visor to the screen surround and the attachment of the visor can be as follows, the rod 51 is engaged in the two supports, 46, so that the spigots 52 face away from each other with the parts 48 engaged in the nip of the resilient screen border 2A and the screen. The stepped elements 39 can then be fitted or alternatively they can be left to a later stage. The parts 36 of the elements 35 are fitted and the locking elements 25 are engaged with the keyhole slots 33 in the parts 35. The stepped parts 39 can now be fitted if they have not already been fitted.

Referring to Figure 6 this shows a modification of the element 25 in which the finger grip is dispensed with and the slot 30 is formed directly in the surface of the annular flange 28.

In a further variation (not shown) the surface of the annular flange is adapted for receiving an Allen type key. If desired the element surface could be provided with a boss with flats for receiving a spanner.

## Claims

1. A system for mounting an extended area article such as a louvred visor (1) in face-to-face relationship with a surface such as the rear screen (2) of a motor vehicle, which surface is connected to a support by means of an elastomeric retaining element (2A) which defines the border of the surface and which co-operates solely with the marginal regions of the surface, the system comprising at least one first type article mounting means (39) and at least one second type article mounting means (35) each including a first part (40, 36) shaped for insertion between the retaining element (2A) and the surface (2) so as to be gripped therebetween and said at least one first type article mounting means (39) includes a second part (43) for receiving and locating edge regions (6, 7) of the article (1) to be mounted; and said at least one second type article mounting means (35) is provided with a second part (34) including a locking assembly (25) adapted for locking edge regions (21) of the article to the second type article mounting means (35); the system being characterised in that said second part (43) of said at least one first type article mounting means (39) defines with the surface (2) a slot (45) for receiving and locating edge regions (6, 7) of the article (1) to be mounted and at least one pair of third type mounting means (46) is provided each thereof including a base (47) from which extends a part (48) shaped for insertion between the element (2A) and the surface (2) so as to be gripped therebetween, and a pillar (49) upstanding from the base (47) carrying a peg or the like member (52) intended for engagement with the article at a location (16, 20) adjacent one edge thereof, there also being a bore or recess (50) in the pillar (49) for receiving a rod (51) such that the latter projects away from the insertable part (48), the arrangement of the first and second type mounting means (39, 35) being such that on fitting at least one first type mounting means (39) along a first edge of the surface by inserting the first part (40) between the element (2A) and the surface (2) and fitting at least one second type mounting means (35) along a second edge of the surface, opposite to the first edge by inserting the first part (36) between the element (2A) and the surface (2), the article (1) is mountable by inserting one of the relevant article edges (6, 7) into the slot (45) defined by the first type mounting means (39) and operating the locking assembly (25) of the associated second type mounting means (35) to secure the adjacent region (21) of the article to the second type mounting means, and the arrangement of said at least one pair of third type mounting means (46) being such that on fitting the two third type mounting means opposite one another at convenient positions along said first and second edges of the surface (2) by insertion of their insertable parts (48) between the element (2A) and the surface, the pegs or the like members (52) are positioned for engagement with the article (1) thereby to provide additional anchorings for the article (1), and the rod (51) is engaged with the bores (50), the rod bridges the surface (2) and provides for still further support of the article.

2. A system as claimed in claim 1, characterised in that two or more of said first type article mounting means (39) are provided at such locations as to be able to engage with each of three adjacent edges (6, 7) of the article (1) when the latter is of rectangular form and two of the second type article mounting means (35) are provided for co-operation with the end regions (21) of the remaining edge of the article (1).

3. A system as claimed in claim 1 or 2, characterised in that the insertable parts (40, 36, 48) of the first, second, and third type article mounting means (39, 35, 46) are each provided with hook like parts (41, 38) which are intended to hook over the peripheral edge of the surface (2) thereby effectively to lock the insertable parts (40, 36, 48) when inserted in their inserted position.

## Patentansprüche

1. System zur Befestigung eines großflächigen Artikels, wie z.B. einer jalousieartigen Blendschutzabdeckung (1), an einer Oberfläche in letzterer gegenüberliegender Lage, wie z.B. an der Heckscheibe (2) eines Motorfahrzeuges, welche Oberfläche mit einem Träger über ein elastisches Halteelement (2A) verbunden ist, welches die Grenzen der Oberfläche bestimmt und welches nur mit den Randbereichen der Oberfläche zusammenwirkt, wobei das System wenigstens ein Befestigungsmittel (39) eines ersten Typs und wenigstens ein Befestigungsmittel (35) eines zweiten Typs umfaßt, von denen jedes einen ersten Teil (40, 36) aufweist, der für das Einfügen zwischen dem Halteelement (2A) und der Oberfläche (2) und das solcherart erzielte Festklemmen ausgebildet ist, wobei das besagte, wenigstens eine Befestigungsmittel (39) des ersten Typs einen zweiten Teil (43) zur Aufnahme und Festlegung der Kantenbereiche (6, 7) des zu befestigenden Artikels (1) aufweist; und wobei das besagte, wenigstens eine Befestigungsmittel (35) des zweiten Typs mit einem zweiten Teil (34) ver-sehen ist, welcher eine Verriegelungseinricht-ung (25) aufweist, welche zum Verriegeln der Kantenbereiche (21) des Artikels mit dem Befestigungsmittel (35) des zweiten Typs ausgebildet ist; dadurch gekennzeichnet, daß der besagte zweite Teil (43) des wenigstens einen Artikelbefestigungsmittels (39) des ersten Typs mit der Oberfläche (2) einen Schlitz (45) zur Aufnahme und Festlegung der Kantenbereiche (6, 7) des zu befestigenden Artikels (1) bildet, und daß wenigstens ein Paar von Befestigungsmitteln (46) eines dritten Typs vorgesehen ist, von denen jedes eine Grundplatte (47), von welcher ein für das Einsetzen und Festklemmen zwischen dem Halteorgan (2A) und der Oberfläche (2) geformter Teil (48) ausgeht, sowie eine von der Grundplatte (47) aufwärts ragende Säule (49) aufweist, die einen Stift oder ein ähnliches Glied (52) trägt, welches vorgesehen ist für das Eingreifen in den Artikel in einem an eine Kante desselben angrenzenden Bereich (16, 20), wobei die Säule (49) auch eine Bohrung oder Kerbe (50) für die Aufnahme einer Stange (51) aufweist, derart, daß sich letztere von dem einsetzbaren Teil (48) hinwegstreckt, daß ferner die Befestigungs-mittel (39, 35) des ersten und des zweiten Typs so angeordnet sind, daß dann, wenn wenigstens ein Befestigungsmittel (39) des ersten Typs entlang einer ersten Kante der Oberfläche durch Einsetzen des ersten Teiles (40) zwischen das Element (2A) und die Oberfläche (2) angebracht ist und wenigstens ein Befestigungsmittel (35) des zweiten Typs entlang einer zweiten, der ersten Kante gegenüberliegenden Kante der Oberfläche durch Einsetzen des ersten Teiles (36) zwischen das Element (2A) und die Oberfläche (2) angebracht ist, der Artikel montierbar ist durch Einfügen einer der entsprechenden Kanten (6, 7) desselben in den durch das Befestigungsmittel (39) des ersten Typs gebildeten Schlitz (45) und Betätigen des Verriegelungsmechanismus (25) des zugeordneten Befestigungsmittels (35) des zweiten Typs, um den benachbarten Bereich (21) des Artikels mit dem Befestigungsmittel des zweiten Typs zu verbinden, und daß Befestigungsmittel (46) des besagten, mindestens einen Paares des dritten Typs in der Weise angeordnet sind, daß, bei einander gegenüberliegendem, an entsprechenden Stellen entlang der besagten ersten und der besagten zweiten Kante der Oberfläche (2) erfolgtem Einbau der beiden, dem dritten Typ angehörenden Befestigungsmittel durch Einsetzen ihrer einfügbaren Teile (48) zwischen dem Element (2A) und der Oberfläche, die Stifte (52) od.dgl. für den Eingriff mit dem Artikel (1) positioniert sind, um damit eine zusätzliche Verankerung des Artikels (1) zu erzeilen, und die Stange (51) in die Bohrungen (50) eingesetzt ist, wobei die Stange die Oberfläche (2) überspannt und so einen weiteren Träger für den Artikel bildet.

2. System nach Anspruch 1, dadurch gekennzeichnet, daß zwei oder mehr Artikelbefestigungsmittel (39) des ersten Typs an solchen Orten angeordnet sind, daß sie mit jeder von drei aneinander anschließenden Kanten (6, 7) des Artikels (1) in Eingriff bringbar sind, wenn der Artikel rechteckig ist, und daß zwei Befestigungsmittel des zweiten Typs zum Zusammenwirken mit den Endbereichen (21) der verbleibenden Kante des Artikels (1) vorgesehen sind.

3. System nach Anspruch 1 oder 2, dadurch gekennzeichnet, daß jeder der einsetzbaren Teile (40, 36, 48) der Artikelbefestigungsmittel (39, 35, 46) des ersten, zweiten und dritten Typs mit hakenartigen Teilen (21) versehen ist, welche dazu dienen, sich an dem äußeren Kantenbereich der Oberfläche (2) festzuhaken und dadurch die Teile (40, 36, 48) in ihrer eingesetzten Lage sicher festzuhalten.

## Revendications

1. Dispositif de montage d'un article de superficie étendue, tel qu'un pare-soleil à volets (1), en regard d'une surface, telle que la lunette arrière (2) d'un vèhicule à moteur, reliée à un support au moyen d'un élément de retenue élastomère (24) délimitant la bordure de la surface et coopérant uniquement avec les zones marginales de la surface, ce dispositif comprenant au moins un moyen de montage d'article d'un premier type (39) et au moins un moyen de montage d'article d'un second type (35), chacun d'eux comportant une première partie (40, 36) formée pour être insérée entre l'élément de retenue (24) et la surface (2) de façon à être tenu ceux-ci, ledit moyen de montage d'article de second type (39) comportant une deuxième partie (43) pour recevoir et maintenir en place des zones marginales (6, 7) de l'article (1) à monter, et ledit moyen de montage d'article de second type (35) étant pourvu d'une seconde partie (34) comportant un mécanisme de verrouillage (25) apte à verrouiller des zones marginales (21) de l'article au moyen de montage d'article de second type (35); caractérisé en ce que la deuxième partie (43) dudit moyen de montage d'article de premier type (39) délimite avec la surface (2) une rainure (45) pour la réception et le maintien en place de zones marginales (6, 7) de l'article à monter, et qu'est prévu au moins une paire de moyens de montage d'un troisième type (46) comportant une base (47) de laquelle s'étend une partie (48) formée pour être insérée entre l'élément (2A) et la surface (2) de façon à être tenu entre ceux-ci, et un pilier (49) s'élevant de la base (47) et portant une broche ou organe analogue (52) destiné à engager l'article en un lieu (16, 20) voisin d'un de ses bords, le pilier (49) présentant en outre un alésage ou une cavité (50) apte á recevoir une tige (51) de telle sorte que celle-ci s'étende à l'écart de la partie insérable (48), la disposition des moyens de montage de premier et second types (39, 35) étant telle qu'en ajustant au moins un moyen de montage de premier type (39) le long d'un premier bord de la surface par insertion de la première partie (40) entre l'élément (2A) et la surface (2) et en ajustant au moins un moyen de montage de second type (35) le long d'un deuxième bord de la surface, à l'opposé du premier bord, par insertion de la première partie (36) entre l'élément (2A) et la surface (2), l'article (1) peut être monté en insérant l'un des bords concernés (6, 7) de l'article dans la rainure (45) délimitée par le moyen de montage de premier type (30) et en actionnant le mécanisme de verrouillage (25) du moyen de montage associé de second type (35) pour fixer la zone voisine (21) de l'article au moyen de montage de second type, et la disposition de ladite paire de moyens de montage de troisième type (46) étant telle qu'en ajustant les deux moyens de montage de troisième type en regard l'un de l'autre en des positions appropriées le long desdits premier et second bords de la surface (2) par insertion de leurs parties insérables (48) entre l'élément (2A) et la surface (2), les broches ou organes analogues (52) se trouvent en position pour être engagés par l'article, ce pour fournir des ancrages additionnels pour l'article (1), et telle que lorsque la tige (51) est engagée avec les alésages (50), la tige ponte la surface (2) et fournit un support encore accru à l'article.

2. Dispositif selon la revendication 1, caractérisé en ce que deux moyens de montage d'article de premier type (39) ou davantage sont prévus en des endroits tels à pouvoir être engagés avec chacun de trois bords adjacents (6, 7) de l'article (1) lorsque celui-ci est de forme rectangulaire et que deux moyens de montage d'article de second type (35) sont prévus de façon à pouvoir coopérer avec les zones terminales (21) du bord restant de l'article (1).

3. Dispositif selon la revendication 1 ou 2, caractérisé en ce que les parties insérables (40, 36, 48) des moyens de montage d'article de premier, second et troisième types (39, 35, 46) sont pourvues chacune de parties en forme de crochet (41, 38) destinées à venir crocher sur le bord périphérique de la surface (2) de façon à effectivement verrouiller les parties insérables (40, 36, 38) lorsqu'elles sont insérées dans leur position insérée.

0 006 332
0 006 332

Fig.1.

Fig.2.

**Fig.4.**

**Fig.3.**

**Fig.5.**

**Fig.6.**